Europäisches Patentamt

European Patent Office

Office européen des brevets

(11) Veröffentlichungsnummer: **0 162 958**
**A1**

(12) # EUROPÄISCHE PATENTANMELDUNG

(21) Anmeldenummer: **84115383.6**

(22) Anmeldetag: **13.12.84**

(51) Int. Cl.⁴: **H 05 B 3/68**

(30) Priorität: **23.05.84 DE 3419234**

(43) Veröffentlichungstag der Anmeldung:
**04.12.85 Patentblatt 85/49**

(84) Benannte Vertragsstaaten:
**AT DE IT**

(71) Anmelder: **Siemens Aktiengesellschaft**
**Berlin und München Wittelsbacherplatz 2**
**D-8000 München 2(DE)**

(72) Erfinder: **Neimanns, Nikolaus**
**Giessener Strasse 12**
**D-6483 Bad Soden-Salmünster(DE)**

(54) **Durchlauferhitzer für Getränkebereiter.**

(57) Offenbart wird ein Durchlauferhitzer für Getränkebereiter. Der Durchlauferhitzer weist ein in der Gebrauchslage im wesentlichen horizontal verlaufendes und in ein Steigrohr übergehendes Wasserführungsrohr (1) auf. Wärmeleitend mit dem Wasserführungsrohr ist ein elektrischer Rohrheizkörper (2) verbunden. Zur Erhöhung der Endtemperatur des den Durchlauferhitzer durchströmenden Wassers, bestehen das Wasserführungsrohr (1) und das Steigrohr aus einem einzigen Rohrstrang und der Rohrheizkörper (2) ist bis zu mindestens einem Teil des Steigrohres verlängert sowie mit dem Steigrohr ebenfalls wärmeleitend verbunden. Die Heizleistung des Rohrheizkörpers (2) ist im Bereich des Steigrohres jedoch zum Beispiel im Verhältnis 4 : 1 schwächer als im übrigen.

EP 0 162 958 A1

Siemens Aktiengesellschaft    Unser Zeichen
Berlin und München            VPA 84 P 3 1 8 9 E

## Durchlauferhitzer für Getränkebereiter

Die Erfindung bezieht sich auf einen Durchlauferhitzer für Getränkebereiter nach dem Oberbegriff des Anspruches 1.

Es ist bereits ein Durchlauferhitzer für Getränkebereiter der im Oberbegriff des Anspruches 1 genannten Art bekannt, bei dem schon eine sehr hohe Temperatur des für die Getränkebereitung aufzuheizenden Wassers erzielt wird (DE-OS 26 39 523).

Aufgabe der Erfindung ist es, für den Durchlauferhitzer für Getränkebereiter nach dem Oberbegriff des Anspruches 1 eine wenig Aufwand erfordernde Ausbildung zu finden, durch die sich noch eine merkliche Erhöhung der Temperatur des zur Getränkebereitung das Wasserführungsrohr durchströmenden Wassers ergibt.

Die gestellte Aufgabe wird erfindungsgemäß durch die im kennzeichnenden Teil des Anspruches 1 angegebene konstruktiven Maßnahmen gelöst.

Eine zweckmäßige Ausbildung des Erfindungsgegenstandes ist im Anspruch 2 angegeben.

Bei Befolgung der im Anspruch 1 angegebenen Lehre zum technischen Handeln wird eine Erhöhung der Wassertemperatur von zirka $3^{o}$ K erzielt.

Die gefundene Lösung hat den Vorteil, daß sich das

Bec 25 Bes / 26.o4.1984

Bauvolumen des Durchlauferhitzers nicht wesentlich ändert.

Die Sicherheit des Durchlauferhitzers wird durch die Beheizung des Steigrohres nicht gemindert. Im Falle des Trockengehens des Steigrohres ist die Heizleistung des Rohrheizkörpers im Bereich des Steigrohres zu schwach, um Schäden an umliegenden Bauteilen hervorrufen zu können.

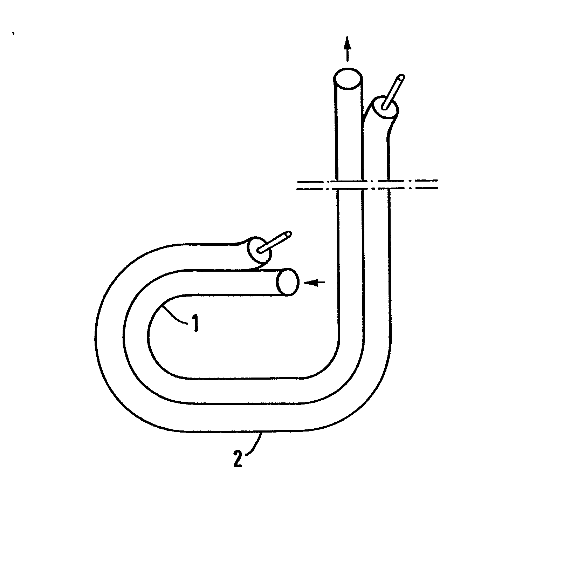

Ein Ausführungsbeispiel der Erfindung wird an Hand der Zeichnung beschrieben, die rein schematisch einen Durchlauferhitzer für Getränkebereiter in perspektivischer Darstellung zeigt.

In der Zeichnung ist mit 1 ein Wasserführungsrohr eines Durchlauferhitzers für Getränkebereiter bezeichnet.

Das Wasserführungsrohr ist in einem in der Gebrauchslage im wesentlichen horizontal verlaufenden Abschnitt, in üblicher Weise hufeisenförmig gebogen. Die dargestellte Form des horizontalen Abschnittes des Wasserführungsrohres ist jedoch nicht zwingend sondern weitgehend frei wählbar. Der Horizontale Abschnitt des Wasserführungsrohres 1 umfaßt auch den durch Pfeil gekennzeichneten Wassereinlauf.

Aus einem horizontal verlaufenden Abschnitt heraus geht das Wasserführungsrohr 1 in einen vertikalen Steigrohrabschnitt über. Der horizontale Abschnitt das Wasserführungsrohres 1 und der Steigrohrabschnitt sind aus einem einzigen Rohrstrang gebildet.

Am Wasserführungsrohr 1 ist ein elektrischer Rohrheizkörper 2 entlanggeführt. Der elektrische Rohr-

0162958

- 3 - VPA 84 P 3 1 8 9 E

heizkörper 2 ist mit dem Wasserführungsrohr 1 wärmeleitend verbunden. Die wärmeleitende Verbindung des Rohrheizkörpers 2 mit dem Wasserführungsrohr 1 kann zum Beispiel durch eine nicht dargestellte Lötbrücke hergestellt sein, deren Länge und Querschnitt auf ein erwünschtes Kochverhalten abgestimmt ist.

Das Wasserführungsrohr 1 und der Mantel des Rohrheizkörpers 2 können jedoch auch aus einem einzigen Strangpreßprofil bestehen, das zwei miteinander verbundene Rohrstränge aufweist.

Der Rohrheizkörper 2 ist, wie dargestellt, auch an dem Steigrohrabschnitt des Wasserführungsrohres 1 entlanggeführt und mit dem Steigrohrabschnitt wärmeleitend verbunden.

Der Rohrheizkörper 2 ist jedoch im Bereich des Steigrohrabschnittes des Wasserführungsrohres 1, also in seinem aufwärts gerichteten Abschnitt, schwächer beheizt als in seinem horizontal verlaufenden Abschnitt. Die schwächere Beheizung kann in nicht dargestellter Weise zum Beispiel dadurch erreicht werden, daß die Steigung der Heizwendel des Rohrheizkörpers 2 im vertikal aufwärts gerichteten Abschnitt größer gewählt wird als im horizontal verlaufenden Abschnitt.

Wenn zum Beispiel der horizontale Abschnitt des Rohrheizkörpers 2 eine Leistung von 8oo Watt aufweist, so genügen 2oo Watt für den vertikal aufwärts gerichteten Abschnitt des Rohrheizkörpers 1, um die erstrebte Erhöhung der Temperatur des Wassers zu erreichen. Das Verhältnis der Leistungen der beiden Abschnitte des Rohrheizkörpers 1 kann bedarfsweise variiert werden.

0162958

Eine weitere Möglichkeit des Variierens besteht darin, soweit es die Einbauverhältnisse zulassen, die Längen der beiden Abschnitte des Wasserführungsrohres 1 und des Rohrheizkörpers 2 zu verändern, ausgehend von einem Längenverhältnis der Abschnitte von etwa 1 : 1 im dargestellten Beispiel.

2 Patentansprüche
1 Figur

Patentansprüche

1. Durchlauferhitzer für Getränkebereiter, mit einem in der Gebrauchslage im wesentlichen horizontal verlaufenden und in ein Steigrohr übergehenden Wasserführungsrohr (1) und einem mit dem Wasserführungsrohr wärmeleitend verbundenen elektrischen Rohrheizkörper (2), d a d u r c h  g e - k e n n z e i c h n e t, daß das Wasserführungsrohr (1) und das Steigrohr aus einem einzigen Rohrstrang bestehen; daß der Rohrheizkörper (2) bis zumindest einem Teil des Steigrohres verlängert und mit dem Steigrohr ebenfalls wärmeleitend verbunden ist; und daß die Heizleistung des Rohrheizkörpers (2) im Bereich des Steigrohres schwächer ist als im übrigen.

2. Durchlauferhitzer nach Anspruch 1, d a d u r c h  g e k e n n z e i c h n e t, daß die Steigung der Heizwendel des Rohrheizkörpers (2) im Bereich des Steigrohres größer als im übrigen ist.

| | Europäisches Patentamt | **EUROPÄISCHER RECHERCHENBERICHT** | | |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 340 489 (BRAUN AG) * Seite 5, Zeilen 18-30; Seite 6, Zeilen 1-9; Figuren 1-3 * | 1 | H 05 B 3/68 |
| | --- | | |
| X | DE-A-2 441 825 (LICENTIA PATENT-VERWALTUNGS-GmbH) * Titel; Seite 3, Zeilen 18-24; Figuren 1,2 * | 1 | |
| | --- | | |
| A | DE-A-1 778 348 (SIEMENS ELECTROGERÄTE GmbH) * Spalte 1, Zeilen 1-6, 46-60; Figuren 2,4 * | 1 | |
| | --- | | |
| A | FR-A-2 061 017 (SIEMENS ELECTROGERÄTE GmbH) * Seite 1, Zeilen 35-40; Figuren 1,2 * | 1 | |
| | --- | | RECHERCHIERTE SACHGEBIETE (Int. Cl.4) |
| A | DE-A-2 454 920 (TÜRK & HILLINGER KG) * Seite 3, Zeilen 22-32; Figuren 1,5 * | 1 | H 05 B 3/00 A 47 J 31/00 F 24 H 1/00 |
| | --- | | |
| A | DE-A-2 645 684 (BOEHM, HANS-GEORG) * Seite 6, Zeilen 22-24; Seite 7, Zeile 25; Figur 1 * | 2 | |
| | ----- | | |

Der vorliegende Recherchenbericht wurde für alle Patentansprüche erstellt.

| Recherchenort DEN HAAG | Abschlußdatum der Recherche 16-07-1985 | Prüfer PIERRON P.A. |
|---|---|---|